# EUROPÄISCHE PATENTANMELDUNG

(11) **EP 1 600 279 A1**
(43) Veröffentlichungstag der Anmeldung: **30.11.2005**
(21) Anmeldenummer: 05450094.7
(22) Anmeldetag: 24.05.2005
(51) Int. Cl.: B29C 63/04

(54) **Verfahren und Vorrichtung zum Umbugen des überstehenden Randes einer Deck- oder Dekorschicht**

(30) Priorität: 27.05.2004 AT 9212004
(71) Anmelder: Pro.Te.x Engineering GmbH, 5760 Saalfelden (AT)
(72) Erfinder: Lidicky, Johann, 6351 Scheffau (AT); Windisch, Gerhard, 5760 Saalfelden (AT)
(74) Vertreter: Babeluk, Michael

(57) **Zusammenfassung**

Die Erfindung betrifft ein Verfahren und eine Vorrichtung zum Umbugen des überstehenden Randes (5) einer Deck- oder Dekorschicht (4) um den Randbereich (11) eines Trägerteils (3), wobei zumindest der Randbereich (11) des Trägerteils (3) aus einem thermoplastischen Kunststoff besteht und zumindest ein an den umgebugten Rand (5') der Deck- oder Dekorschicht (4) heranführbares, heizbares Stempelelement (9) vorgesehen ist. Erfindungsgemäß ist zum Umbugen des überstehenden Randes (5) der Deck- oder Dekorschicht (4) ein vorzugsweise in einer Aufnahme (1) für das Trägerteil (3) geführter Umbugschieber (6) vorgesehen ist, welcher Öffnungen oder Ausnehmungen (8) für den Durchtritt des zumindest einen heizbaren Stempelelementes (9) aufweist, welches die Deck- oder Dekorschicht (4) zumindest punktförmig in den durch das Stempelelement (9) erweichten Randbereich (11) des Trägerteils (3) einpresst.

## Beschreibung

Die Erfindung betrifft ein Verfahren und eine Vorrichtung Umbugen des überstehenden Randes einer Deck- oder Dekorschicht um den Randbereich eines Trägerteils, wobei zumindest der Randbereich des Trägerteils aus einem thermoplastischen Kunststoff besteht und wobei der umgebugte Rand mit zumindest einem heizbaren Stempelelement in den sich erweichenden Randbereich des Trägerteils eingepresst wird.

Verkleidungsteile, insbesondere für die Innenverkleidung von Kraftfahrzeugen, wie beispielsweise Säulenverkleidungen, Instrumententafeln, Abdeckungen für Handschuhfächer, etc. bestehen meist aus einem formstabilen Trägerteil, das mit einer Deck- oder Dekorschicht, beispielsweise einem textilen Verkleidungsmaterial oder einer Kunststofffolie überzogen ist. Um den Randbereich derartiger Verkleidungsteile formschön zu gestalten, ist es notwenig, die Deck- oder Dekorschicht über den Rand des Trägerteils umzuschlagen (umzubugen) und an der Innenseite des Trägerteils zu fixieren.

Vorrichtungen zum Umbugen des Dekormaterials sind in zahlreichen Ausführungsvarianten bekannt und bestehen in der Regel aus einer Aufnahmeform in welcher das Verkleidungsteil bei der Bearbeitung fixiert wird und einer Reihe von Schiebeelementen, welche den umzubugenden Rand des Dekormaterials an der Innenseite des Trägerteils festhalten.

Die Haftung des umgebugten Randes des Dekormaterials an der Innenseite des Trägerteils wird bei vielen bekannten derartigen Vorrichtungen dadurch erzielt, dass auf der Innenseite des Randbereiches des Trägerteils ein Kleber aufgetragen wird. Zum Einsatz kommen entweder Kontaktkleber oder wärmeaktivierbare Kleber. Letztere werden beispielsweise unmittelbar vor dem Umbugvorgang durch Aufheizung mittels Wärmestrahlung oder Heißluft klebefähig gemacht, oder auch durch den umgebugten Rand des Trägermaterials hindurch mit Hilfe der geheizten Wirkflächen der Umbugschieber aktiviert.

Beispielsweise ist aus der DE 43 08 925 A1 ein Verfahren und eine Vorrichtung zum Umlegen und Befestigen des am Teilrand überstehenden Bezugsmaterials für Fahrzeuginnenverkleidungsteile bekannt geworden, bei welcher der Klebstoff mit Hilfe einer Heißluftdüse erwärmt und somit aktiviert wird. Danach wird das Bezugsmaterial über die Kante geschoben und auf der Teilrückseite verklebt.

Nachteilig dabei ist der notwendige Kleberauftrag, da er einerseits zusätzliche Materialskosten für den Kleber verursacht und andererseits aufwendige Verfahrensschritte zum sauberen und emissionsarmen Auftragen der Kleberschicht voraussetzt. In diesem Zusammenhang ist aus der DE 295 07 067 Ul eine Vorrichtung zum kleberfreien Umbug von Verkleidungsteilen bekannt geworden, bei welcher die Haftung des umgebugten Randes des Dekormaterials an der Innenfläche des Trägerteils ohne Verwendung eines zusätzlichen Klebers dadurch erfolgt, dass die Oberfläche des Trägerteils im Umbugbereich mit Hilfe von Heißluft oder eines Infrarot-Strahlers angeschmolzen und dadurch haftfähig gemacht wird. Der Verkleidungsteil wird dabei mit Hilfe einer beweglichen Aufnahme an das Heizelement herangeführt, danach wieder abgesenkt und der überstehende Rand mit Hilfe eines Umbugschiebers umgeschlagen und zur Aufbringung des benötigten Klebedruckes an den Umbugschieber angepresst.

Es ist auch bekannt, den umgebugten Rand der Dekorschicht mittels Ultraschall zu verschweißen. Nachteilig dabei ist der relativ große Geräteaufwand sowie die nicht unbeträchtliche Schallemission der Ultraschallsonotroden.

Weiters ist aus der EP 0 792 734 B1 ein Verfahren und eine Vorrichtung zum Herstellen eines Formteils mit einer von einem Dekormaterial bedeckten Oberfläche bekannt geworden, wobei das Formteil durch Hinterspritzen des in einem Formteilhohlraum eingelegten Dekormaterials mit einem geeigneten Kunststoff hergestellt wird. Das Dekormaterial wird dabei nach dem Spritzvorgang durch Eindrücken in das noch plastisch verformbare Formteil befestigt. Das Verfahren ist relativ aufwendig, insbesondere dann, wenn Verkleidungsteile mit kompliziert geformten Außenrändern umgebugt werden müssen.

Schließlich ist aus der DE 197 06 712 Al ein Verfahren und eine Vorrichtung zum Umbugen von Beleg- oder Dekormaterial bekannt geworden, bei welchem ein Drehwerkzeug verwendet wird, welches eine winklige Ausnehmung aufweist, in welche der freie Rand eines Formteils samt dem überstehenden Dekormaterial hineinragt. Durch die Drehbewegung des Drehwerkzeuges wird der überstehende Rand erfasst und auf die nicht mit Beleg- oder Dekormaterial bedeckte Seite des Formteils umgebugt. Für eine wirksame Anpressung fehlt allerdings der Gegendruck bzw. eine wirksame Unterstützung des Formteils. Der Überstand des Beleg- oder Dekormaterials oder auch das Drehwerkzeug kann vor dem Umbugen erhitzt werden, um eine bessere Haftwirkung auf dem Formteil zu erreichen.

Aus der JP 62-211127 A und der JP 10-202737 A sind Verfahren und Vorrichtungen zum Umbugen eines überstehenden Randes einer Deck- oder Dekorschicht bekannt, bei welchen der umgebugte Rand mit einem heizbaren Stempelelement (siehe beispielsweise Fig. 4 der JP 62-211127 A) in den sich erweichenden Randbereich eines Trägerteiles eingepresst wird.

Aus der JP 10-202737 A ist zusätzlich zu einem Umbugschieber zum Umbugen des überstehenden Randes ein federbelastetes Element bekannt, welches an der Halterung für das heizbare Stempelelement befestigt ist und mit welchem der umgebugte Rand der Dekorschicht noch am Trägerteil festgehalten werden kann, wenn das heizbare Stempelelement bereits angehoben wird.

Aufgabe der Erfindung ist es, ausgehend von bekannten Verfahren und Vorrichtungen zur Herstellung eines kleberfreien Umbugs von Deck- oder Dekorschichten Verbesserungen vorzuschlagen, die den Verfahrensablauf und die dafür notwendige Vorrichtung vereinfachen, ohne die Qualitätsanforderungen an das Endprodukt zu verringern.

Diese Aufgabe wird erfindungsgemäß dadurch gelöst, dass der Rand der Deck-oder Dekorschicht von einem Umbugschieber in die zu fixierende Position umgeschlagen und festgehalten wird, sowie dass das zumindest eine heizbare Stempelelement durch zumindest eine Öffnung oder Aussparung des Umbugschiebers auf die Deck- oder Dekorschicht durchgreift. Für das Umbugen und Festhalten der Deck- oder Dekorschicht wird somit nur ein Bauteil, nämlich der Umbugschieber benötigt, wobei das bzw. die heizbaren Stempelelemente punktgenau durch die Öffnungen oder Aussparungen des Umbugschiebers auf den zu befestigenden Rand der Dekorschicht durchgreifen. Beim erfindungsgemäßen Verfahren erfolgt der Umbug des Randes der Deck- oder Dekorschicht noch im kalten Zustand, wobei das heizbare Stempelelement für eine sichere Fixierung der Dekorschicht im Randbereich sorgt. Die zur Verklebung einzubringende Wärmemenge kann im Unterschied zu bekannten Verfahren, bei welchen Heißluftdüsen oder Infrarotstrahler verwendet werden, punktgenau dosiert werden.

Gemäß einer Weiterbildung der Erfindung ist vorgesehen, dass die Deck- oder Dekorschicht zumindest in Teilbereichen von den heizbaren Stempelelementen durchdrungen wird. Dadurch wird eine besonders gut haftende Fixierung erzielt.

Eine erfindungsgemäße Vorrichtung zum Umbugen des überstehenden Randes einer Deck- oder Dekorschicht um den Randbereich eines Trägerteils, wobei zumindest der Randbereich des Trägerteils aus einem thermoplastischen Kunststoff besteht und zumindest ein an den umgebugten Rand der Deck- oder Dekorschicht heranführbares, heizbares Stempelelement vorgesehen ist, zeichnet sich dadurch aus, dass zum Umbugen des überstehenden Randes der Deck- oder Dekorschicht ein vorzugsweise in einer Aufnahme für das Trägerteil geführter Umbugschieber vorgesehen ist, welcher Öffnungen oder Ausnehmungen für den Durchtritt des zumindest einen, heizbaren Stempelelementes aufweist, welches die Deck- oder Dekorschicht zumindest punktförmig in den durch das Stempelelement erweichten Randbereich des Trägerteils einpresst.

Erfindungsgemäß können die heizbaren Stempelelemente an der der Deck- oder Dekorschicht zugewandten Oberfläche eine die Deck- oder Dekorschicht zumindest punktweise durchdringende Struktur, beispielsweise in Form von pyramiden- oder kegelförmigen Erhebungen, aufweisen. Dies dient zur besseren Fixierung der Deck- oder Dekorschicht am Trägerteil.

Die Erfindung wird im Folgenden anhand eines Ausführungsbeispiels näher erläutert. Es zeigen
- Fig. 1: in schematischer Schnittdarstellung eine erfindungsgemäße Vorrichtung zum Umbugen des überstehenden Randes einer Deckoder Dekorschicht um den Endbereich eines Trägerteils in einer ersten Arbeitsstellung, die
- Fig. 2 und 3: die Vorrichtungen nach Fig. 1 in einer zweiten und einer dritten Arbeitsstellung, sowie die
- Fig. 4: ein Detail der Vorrichtung nach Fig. 1 in einer Schrägansicht.

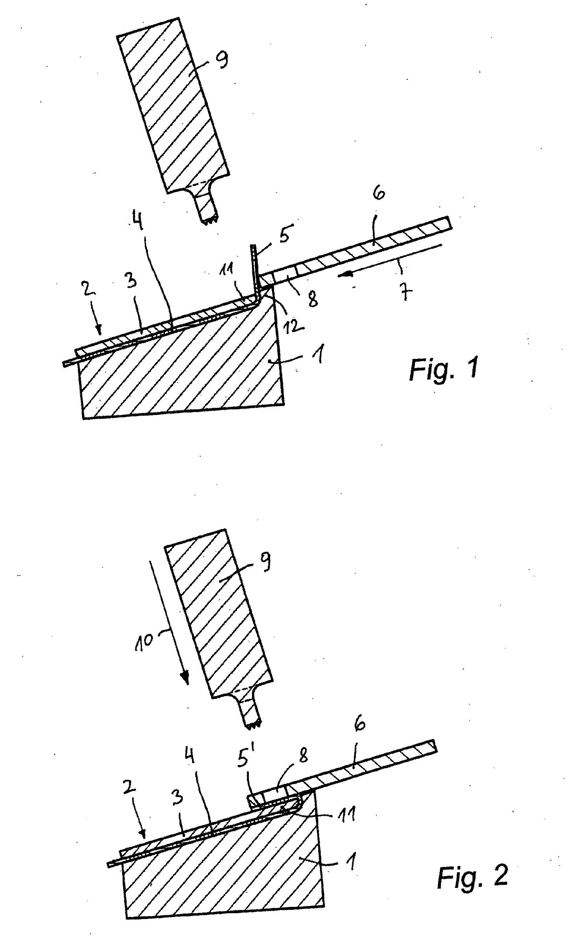

Die in den Figuren 1 bis 3 in unterschiedlichen Arbeitsstellungen dargestellte Vorrichtung zeigt in einer Aufnahme 1 ein Verkleidungselement 2, bestehend aus einem Trägerteil 3 und einer an der Außenseite aufkaschierten Deck- oder Dekorschicht 4, welche einen überstehenden Rand 5 aufweist. Das zum Umbugen in die Aufnahme 1 eingelegte Verkleidungselement 2 wird durch hier nicht weiter dargestellte Mittel, beispielsweise durch einen zwischen der Aufnahme 1 und dem Verkleidungselement 2 erzeugten Unterdruck, festgehalten. Zum Umbugen des überstehenden Randes 5 der Deck- oder Dekorschicht 4 ist ein beispielsweise in der Aufnahme 1 für das Verkleidungsteil 2 geführter Umbugschieber 6 vorgesehen, welcher mit einer Zustellbewegung gemäß Pfeil 7 den durch einen Absatz 12 der Aufnahme 1 aufgerichteten Rand 5 in eine in Fig. 2 dargestellten Stellung bringt, in welcher der umgebugte Rand 5' der Deck- und Dekorschicht 4 in der zu fixierenden Position vom Umbugschieber 6 festgehalten wird. Der Umbugschieber 6 weist Öffnungen oder Ausnehmungen 8 auf, durch welche heizbare Stempelelemente 9 auf die Deck- oder Dekorschicht 4 bzw. deren umgebugten Rand 5' durchgreifen können. Die Zustellbewegung des zumindest einen heizbaren Stempelelementes 9 (siehe Pfeil 10) erfolgt im Wesentlichen normal auf die Oberfläche des Randbereiches 11 des Trägerteils 3, in welchem die Deck- oder Dekorschicht 4 zumindest punktförmig in den durch das Stempelelement 9 erweichten Randbereich 11 des Trägerteils 3 eingepresst wird.

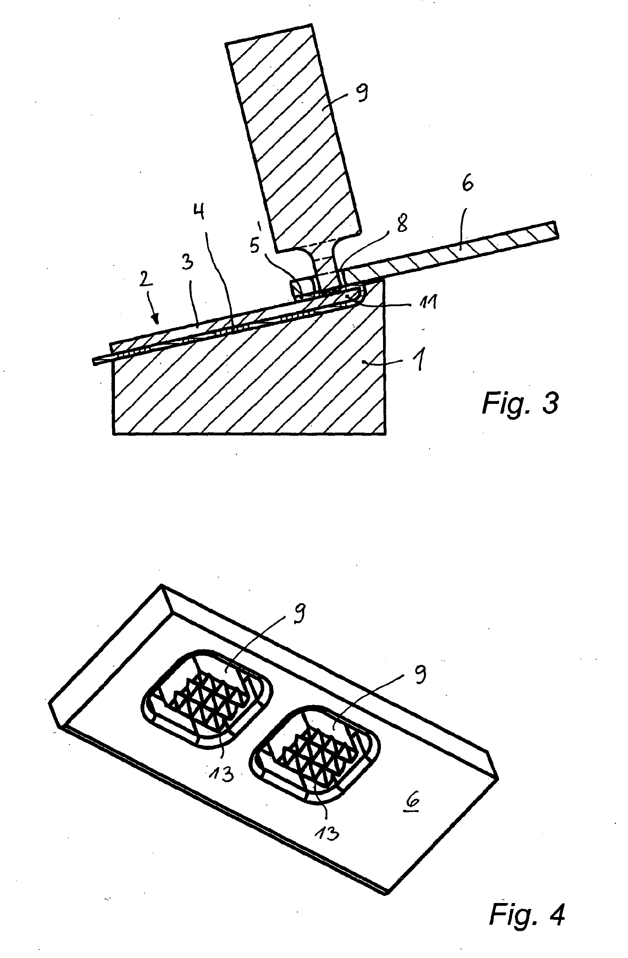

Zur besseren Fixierung der Deck- oder Dekorschicht 4 am Randbereich des Trägerteils 3 weisen die heizbaren Stempelelemente 9 an der der Deck- oder Dekorschicht 4 zugewandten Oberfläche eine die Deck- oder Dekorschicht 4 zumindest punktweise durchdringende Struktur auf. Diese kann, wie im Detail in Fig. 4 dargestellt, ein Riffelmuster, beispielsweise in Form von pyramiden- oder kegelförmigen Erhebungen 13, aufweisen. Das Riffelmuster der Stempelelemente 9 überträgt die thermische Energie durch das Deck- oder Dekormaterial (z.B. aus Stoff) in das Trägerteil aus einem Thermoplast, sodass der Stoff und das Trägermaterial miteinander verschweißt werden. Eine nicht dargestellte Regelung hält die Temperatur der Stempelelemente 9 konstant, welche in Abhängigkeit der verwendeten Materialien in einem Bereich zwischen 150°C und 300°C liegt. Mehrere Stempelelemente 9 können auf einer Führungseinheit montiert sein und gleichzeitig mit einem definierten Anpressdruck auf das Verkleidungselement zugestellt werden.

## Patentansprüche

1. Verfahren zum Umbugen des überstehenden Randes einer Deck- oder Dekorschicht um den Randbereich eines Trägerteils, wobei zumindest der Randbereich des Trägerteils aus einem thermoplastischen Kunststoff besteht und wobei der umgebugte Rand mit zumindest einem heizbaren Stempelelement in den sich erweichenden Randbereich des Trägerteils eingepresst wird, **dadurch gekennzeichnet, dass** der Rand der Deck- oder Dekorschicht von einem Umbugschieber in die zu fixierende Position umgeschlagen und festgehalten wird, sowie dass das zumindest eine heizbare Stempelelement durch zumindest eine Öffnung oder Aussparung des Umbugschiebers auf die Deck- oder Dekorschicht durchgreift.

2. Verfahren nach Anspruch 1, **dadurch gekennzeichnet, dass** die Deck-oder Dekorschicht zumindest in Teilbereichen von den heizbaren Stempelelementen durchdrungen wird.

3. Vorrichtung zum Umbugen des überstehenden Randes (5) einer Deck- oder Dekorschicht (4) um den Randbereich (11) eines Trägerteils (3), wobei zumindest der Randbereich (11) des Trägerteils (3) aus einem thermoplastischen Kunststoff besteht und zumindest ein an den umgebugten Rand (5') der Deck- oder Dekorschicht (4) heranführbares, heizbares Stempelelement (9) vorgesehen ist, **dadurch gekennzeichnet, dass** zum Umbugen des überstehenden Randes (5) der Deck- oder Dekorschicht (4) ein vorzugsweise in einer Aufnahme (1) für das Trägerteil (3) geführter Umbugschieber (6) vorgesehen ist, welcher Öffnungen oder Ausnehmungen (8) für den Durchtritt des zumindest einen heizbaren Stempelelementes (9) aufweist, welches die Deck- oder Dekorschicht (4) zumindest punktförmig in den durch das Stempelelement (9) erweichten Randbereich (11) des Trägerteils (3) einpresst.

4. Vorrichtung nach Anspruch 3, **dadurch gekennzeichnet, dass** die heizbaren Stempelelemente (9) an der der Deck- oder Dekorschicht (4) zugewandten Oberfläche eine die Deck- oder Dekorschicht (4) zumindest punktweise durchdringende Struktur aufweisen.

5. Vorrichtung nach Anspruch 4, **dadurch gekennzeichnet, dass** die der Deck- oder Dekorschicht (4) zugewandte Struktur der heizbaren Stempelelemente (9) ein Riffelmuster, beispielsweise in Form von pyramiden- oder kegelförmigen Erhebungen (13), aufweist.
